# EUROPEAN PATENT APPLICATION

(11) **EP 4 610 698 A1**
(43) Date of publication of application: **03.09.2025**
(21) Application number: 24160154.1
(22) Date of filing: 28.02.2024
(51) Int. Cl.: G01T 1/20

(54) **PCB FOR RADIATION DETECTION**

(71) Applicant: Detection Technology Oyj, 90590 Oulu (FI)
(72) Inventor: Matikkala, Mikko, 90590 Oulu (FI); Litichevskyi, Vladyslav, 90590 Oulu (FI)
(74) Representative: Papula Oy

(57) **Abstract**

Various example embodiments relate to a PCB for radiation detection. Example embodiments may comprise: a hole, wherein a scintillator material is arranged to the hole along a depth direction of the hole such that the scintillator material comprises a thickness; and wherein the thickness of the scintillator material is configured to be such that the scintillator material converts radiation in a first energy range to radiation in a second energy range, the second energy range comprising lower energies than the first energy range.

## Description

### TECHNICAL FIELD

This disclosure relates to a printed circuit board, PCB, for radiation detection. In particular, the PCB comprises a hole, or a cavity, wherein a scintillator material is arranged in the hole to form an X-ray detector. Furthermore, this disclosure relates to an X-ray detector device comprising the PCB.

### BACKGROUND

Radiation detectors, such as X-ray detectors, are used in multiple fields, such as the medical field, wherein an X-ray detector may be used to inspect patients, or the automotive industry, where an X-ray detector may be used to detect faults in batteries. Other applications of an X-ray detector may be in the mining industry or in the security industry.

X-ray detectors are often expensive due to the manufacturing costs and therefore more inexpensive solutions are often sought for. Modern X-ray devices utilize modern electronics manufacturing, such that they may comprise a printed circuit board, PCB, wherein the PCB comprises an arrangement of detectors to convert X-ray radiation energy to electrical energy.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. The scope of protection sought for various embodiments of the present disclosure is set out by the independent claims.

According to a first aspect, there is provided a printed circuit board, PCB, for radiation detection, the PCB comprising: a hole, wherein a scintillator material is arranged to the hole along a depth direction of the hole such that the scintillator material comprises a thickness; and wherein the thickness of the scintillator material is configured to be such that the scintillator material converts radiation in a first energy range to radiation in a second energy range, the second energy range comprising lower energies than the first energy range.

In an implementation form of the first aspect, the PCB may further comprise: a first opening, wherein a photodiode is arranged to the first opening; and wherein the second energy range is detectable by the photodiode.

In an implementation form of the first aspect, a metallic material is arranged to at least a portion of at least one wall of the hole and the metallic material is configured to at least partially reflect radiation in the first energy range.

In an implementation form of the first aspect, at least a portion of the metallic material arranged to at least a portion of the at least one wall of the hole comprises gold (Au), silver (Ag), and/or tin (Sn).

In an implementation form of the first aspect, the hole further comprises a second opening and wherein a reflector is arranged to the second opening; and the reflector is configured to at least partially reflect radiation at least in the first energy range.

In an implementation form of the first aspect, the reflector comprises a PCB copper layer.

In an implementation form of the first aspect, the hole is a PCB via.

In an implementation form of the first aspect, the PCB via is: a plated thru hole, non-plated thru hole, a blind via, a capped via, or a plugged via.

In an implementation form of the first aspect, the photodiode is a backside illuminated, BSI, photodiode or a frontside illuminated, FSI, photodiode.

An implementation form of the first aspect further comprises a plurality of the holes, and wherein the plurality of the holes is configured as two physically separated sets along a direction across the PCB.

In an implementation form of the first aspect, the two physically separated sets of holes along the direction across the PCB are arranged on both sides of the PCB.

In an implementation form of the first aspect, the hole comprises a High-Energy, HE, -hole and the PCB further comprises: a Low-Energy, LE, -hole, wherein a scintillator material is arranged to the LE-hole along a depth direction of the LE-hole and the scintillator material arranged to the LE-hole comprises a second thickness; and wherein the second thickness of the scintillator material arranged to the LE-hole is configured to be such that the scintillator material arranged to the LE-hole converts radiation in a fourth energy range to radiation in a fifth energy range, the fourth energy range comprising lower energies than the first energy range of the HE-hole.

In an implementation form of the first aspect, the LE-hole further comprises: a third opening, wherein at least one photodiode is arranged to the third opening; and wherein the fifth energy range is detectable by the at least one photodiode.

An implementation form of the first aspect comprises: a plurality of HE-holes and a plurality of LE-holes; and the plurality of HE-holes and the plurality of LE-holes are arranged to alternate between sets of the plurality of HE-holes and the plurality of LE-holes along a direction across the PCB.

In an implementation form of the first aspect, the PCB is a ceramic PCB or an aluminium PCB.

According to a second aspect, there is provided an X-Ray detector device comprising the PCB according to the first aspect.

### BRIEF DESCRIPTION OF THE DRAWINGS

The accompanying drawings, which are included to provide a further understanding of the charging apparatus and constitute a part of this specification, illustrate examples and together with the description help to explain the principles of the charging apparatus. In the drawings:
**FIG. 1** illustrates a printed circuit board, PCB 100, according to an example embodiment.
**FIG. 2** illustrates a PCB 100, according to an example embodiment.
**FIG. 3A** illustrates a PCB 300, according to an example embodiment.
**FIG. 3B** illustrates a PCB 310, according to an example embodiment.
**FIG. 3C** illustrates a PCB 330, according to an example embodiment.
**FIG. 4A** illustrates a PCB 400, according to an example embodiment.
**FIG. 4B** illustrates a PCB 400, according to an example embodiment.
**FIG. 5** illustrates different types of PCB vias that may be utilized in the disclosure.
**FIG. 6** illustrates a flow diagram of a manufacturing method, how example embodiments may be constructed.
**FIG. 7A** illustrates a PCB 700 according to an example embodiment.
**FIG. 7B** illustrates a PCB 710 according to an example embodiment.
**FIG. 7C** illustrates a PCB 720 according to an example embodiment.
**FIG. 8** illustrates a PCB 800 according to an example embodiment.
**FIG. 9** illustrates a PCB 820 according to an example embodiment.
**FIG. 10** illustrates a PCB 820 according to an example embodiment.

Like reference numerals are used to designate like parts in the accompanying drawings.

### DETAILED DESCRIPTION

Reference will now be made in detail to embodiments, examples of which are illustrated in the accompanying drawings. The detailed description provided below in connection with the appended drawings is intended as a description of the present examples and is not intended to represent the only forms in which the present example may be constructed or utilized. The description sets forth functions of the example and sequence of steps for constructing and operating the example. However, the same or equivalent functions and sequences may be accomplished by different examples.

The disclosure enables low-cost X-ray detection PCB, by utilizing a cavity or a `hole' that can be manufactured in the PCB during assembly phase. The term `PCB' and `PCB Assembly', PCBA, are often equivalent in the detailed description section. References to a `PCB' will be used from here on.

X-ray detection is based on the radiological density of different materials, wherein the radiological density is determined by the density and the atomic number (number of protons in the nuclei) of material being imaged. Different materials absorb different amount of X-ray, which produces a contrast between the imaged picture detected by an X-ray detector. One way to detect X-rays is to use scintillator material, that is used to convert X-ray radiation to lower energies of the electromagnetic spectrum (e.g., visible light). These lower energies then may be detected further by, for example, a photodiode that converts the lower energy radiation to an electrical signal that may be processed.

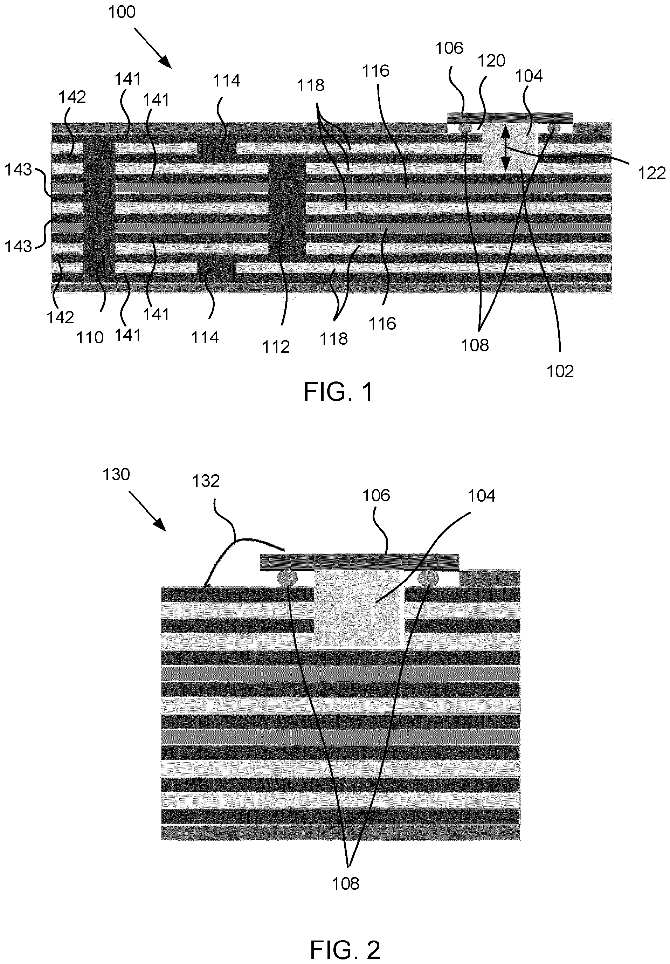

FIG. 1 illustrates a side-view of an example embodiment of a printed circuit board, PCB 100. The PCB 100 may comprise different layers such as signal layers 141, ground plane layers 142 and/or filter layers 143. The layers may comprise copper layers and they may comprise different functions, for example the signal layers 141 may be configured to transfer electrical signals. The filter layers 143 may be used to, for example, create additional electrical insulation between the signal layers 141. Vias may be used to transfer electrical signals between the layers. The example in FIG. 1 illustrates a plated thru-hole, PTH, -via 110, a buried via 112 and two laser vias 114. The ground plane layers 142 may comprise a PCB ground plane, for example. In between the layers, different core layers 116 and/or prepreg substance layers 118 may be arranged to physically separate the layers.

According to an embodiment, the PCB 100 may comprise a hole 102, wherein a scintillator material 104 is arranged to the hole 102 along a depth direction of the hole 102 such that the scintillator material 104 comprises a thickness 122. Herein, the thickness 122 may be measured along a normal of the surface of the PCB 100. For example, in the example embodiment of Fig. 1, the thickness may be measured along the depth direction of the hole 102 - e.g., vertically. Furthermore, in the example embodiment, the thickness 122 of the scintillator material 104 is configured to be such that the scintillator material 104 converts radiation in a first energy range to radiation in a second energy range, the second energy range comprising lower energies than the first energy range.

The radiation in the first energy range may comprise, for example, X-ray and/or gamma ray radiation. Any disclosure herein in relation to X-ray radiation may also apply to gamma ray radiation. For example, any embodiment disclosed herein may be applied to X-ray radiation detection and/or to gamma ray radiation detection.

The thickness 122 and the material type of the scintillator material 104 can determine the first energy range, that is converted to the second energy via scintillation. This is due to the penetration properties of different X-ray energy levels: higher energy X-rays typically have lower absorption rate than lower energy X-rays - therefore higher energy X-rays penetrate more matter, typically requiring a thicker configuration for the scintillator material 104 for detection.

Furthermore, while the second energy range comprises lower energies than the first energy range, it is possible that their spectral range may overlap with each other in some embodiments. For example, if the first energy range is configured to be a low-energy X-ray range, such as 10-100 keV, the second energy range may comprise energies such as 0.1-20 keV or the like.

The hole 102 may comprise a cavity. - E.g., cavity and hole are generally equivalent terms, however, in general terms a hole comprises an opening, but a cavity may be a hollow, empty space within a solid object without an opening. The hole 102 may be generated by for example, a precise drilling operation, or alternatively it may be generated during the manufacturing process of the PCB 100, by, for example, leaving the desired position of the hole 102 open in the PCB 100 during assembly phase (E.g., the 3D coordinates of the hole 102 may not be manufactured during the manufacturing process).

The scintillator material 104 may comprise, for example, a composite scintillator material, such as ceramic type Gadolinium oxysulfide, GOS, scintillator material.

The first energy range may comprise, for example, an 80-1000 keV range. Alternatively, the first energy range may comprise lower energies such as a 10-100 keV range. The disclosure does not limit different energy range configurations for the scintillator material 104 arranged in the hole 102. The thickness (or height) of the scintillator material 104 can be used to control the absorption thickness of the scintillator material 104, therefore the thickness of the scintillator material 104 and the chosen type of the scintillator material 104 can be used to control the detectable energy range.

According to an embodiment, the hole 102 may comprise a first opening 120, wherein a photodiode 106 may be arranged to the first opening 120 and wherein the second energy range is detectable by the photodiode 106.

The photodiode 106 may be configured to convert the radiation in the second energy range to an electric current. The second energy range may comprise, for example, the visible light spectrum. For example, photodiodes that are reverse-biased, holes in the semiconductor material (that the photodiode is made of) move towards anode and the electrons to the cathode, when excited by a photon with energies in the visible light spectrum.

In some embodiments, the photodiode 106 may be a frontside illuminated, FSI, photodiode, that is flip chip bonded on the PCB 100 with Au studs 108. FIG. 2 illustrates an example of the PCB 100, where the photodiode 106 may be coupled with a backside wire bond 130 on the PCB 100. For example, the anode of the photodiode 106 may be installed on the Au studs 108 and the cathode may be bonded with the backside wire bond 132.

In some embodiments, the photodiode 106 may be a backside illuminated, BSI, photodiode.

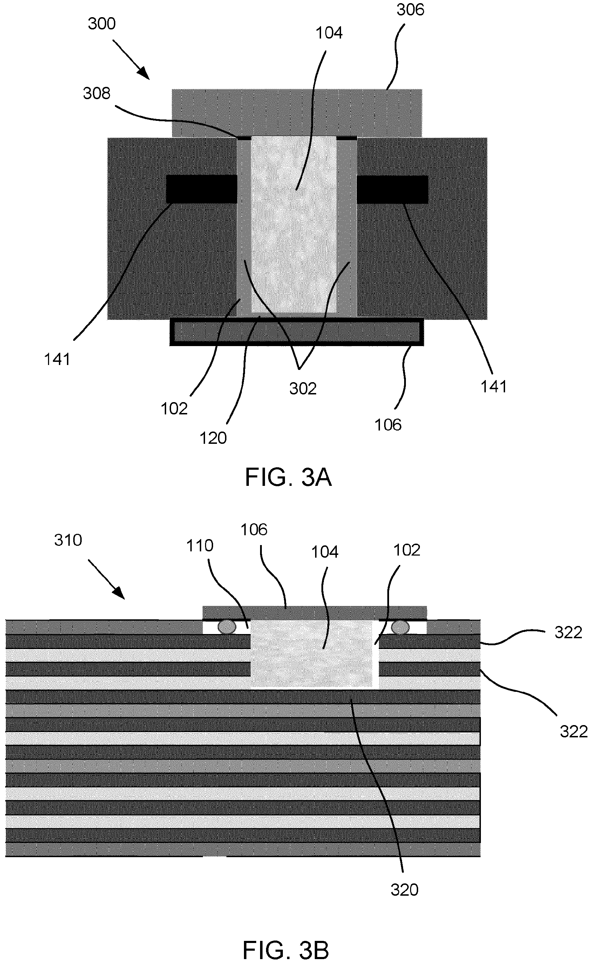

FIG. 3A illustrates an example embodiment of a PCB 300, wherein a metallic material 302 is arranged to at least a portion of at least one wall of the hole 102.

The at least one wall may comprise at least one vertical face of the hole 102. For example, if the hole 102 is a round, cylindrically shaped hole, there is only one wall or a vertical face as per the geometry. In some embodiments, the hole 102 may be, for example, hexagonally shaped, a cube, or a cuboid, where there are multiple walls (or vertical faces), therefore the metallic material 302 may be arranged on a plurality of walls.

Furthermore, the metallic material 302 can be configured to at least partially reflect radiation in the first energy range. E.g., the metallic material 302 can be arranged to multiple walls of the hole 102 (or the one wall in case the hole 102 is cylindrically shaped) to keep as much energy in the first energy range inside the scintillator material 104 arranged to the hole 102 as possible, therefore maximizing the absorption. However, the metallic material 302 arranged to the at least one wall of the hole 102 may also reflect radiation outside the first energy range.

In practical implementations, the metallic material 302 may also reflect radiation in energy ranges other than the first energy range and/or may not reflect all radiation in the first energy range. In some embodiments, the metallic material 302 may be configured to reflect most of the radiation in the first energy range.

For example, if the scintillator material 104 inside the hole 102 is configured for high-energy, HE, -range of the electromagnetic spectrum such as 80-1000 keV range, it can be beneficial to maximize the absorption due to, for example, possibly higher loss rate of the HE-range compared to, for example, the low-energy, LE, -range and maximizing the penetration distance of the photons due to reflections in the travel path.

Furthermore, a signal layer 141 of the PCB 300 may be configured to provide additional reflective and/or filtering properties. For example, the signal layer 141 of the PCB 300 may be configured to reflect lower energies than the first energy range.

In some embodiments, the metallic material 302 is arranged to a plurality of walls of the hole 102. For example, if the hole 102 is not circular (only one wall or vertical face) but rectangular (four walls/ vertical faces), then the metallic material 302 may be arranged to each wall portion of the hole 102.

In some embodiments, the hole 102 may further comprise a second opening 308, wherein a reflector 306 is arranged to the second opening 308. In such embodiments, the hole 102 may be a thru-hole such as a plated thru via, PTH. The reflector 306 may be configured to at least partially reflect radiation in the first energy range to further increase absorption of the scintillator material 104.

The reflector 306 may comprise a copper block arranged to the second opening 308 as illustrated in FIG. 3A - or alternatively in some embodiments, the reflector 306 may comprise a PCB copper layer. FIG. 3B illustrates such an example PCB 310, wherein the hole 102 may not be a thru-hole, but the depth of the hole 102 is configured as such that the bottom of the hole 102 is a PCB copper layer 320 acting as a reflector.

Furthermore, FIG. 3B illustrates an example where the metallic material 302 may not be arranged to the whole vertical depth of the at least one wall of the hole 102. In the example of FIG. 3B, a PCB copper layer 322 comprises the metallic material 302 arranged to the at least one wall of the hole 102. In some embodiments, the metallic material 302 may be arranged to the whole at least one wall of the hole 102, as is illustrated in FIG. 3A.

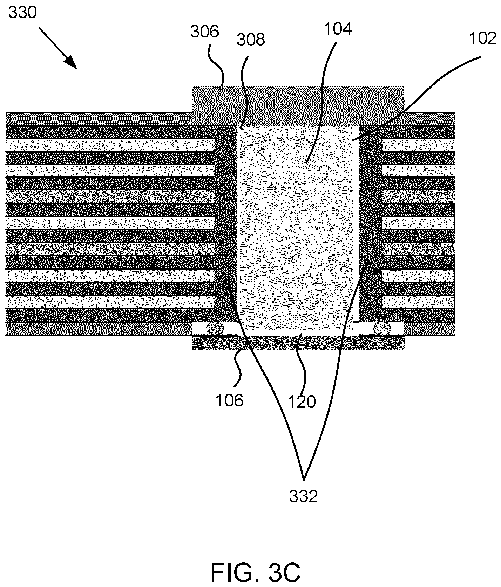

FIG. 3C illustrates an example PCB 330, wherein a PCB via structure 332 comprise the metallic material 302 arranged to the at least one wall of the hole 102. For example, the place where the hole 102 is arranged to the PCB 330 may be originally a PCB thru-via as illustrated in FIG. 3C, and a drilling operation can be performed on the PCB thru-via leaving the PCB via structure 332 to the at least one wall of the hole 102 as is illustrated in FIG. 3C.

In some embodiments of the disclosure, at least a portion of the metallic material 302 arranged to at least a portion of at least one wall of the hole 102 comprises gold (Au), silver (Ag), and/or Tin (Sn). For example, depending on the detection range of the scintillator material 104, the metallic material 302 may be fully Au, or fully Sn, or portions of the metallic material 302 may be Au and/or Sn alternatively.

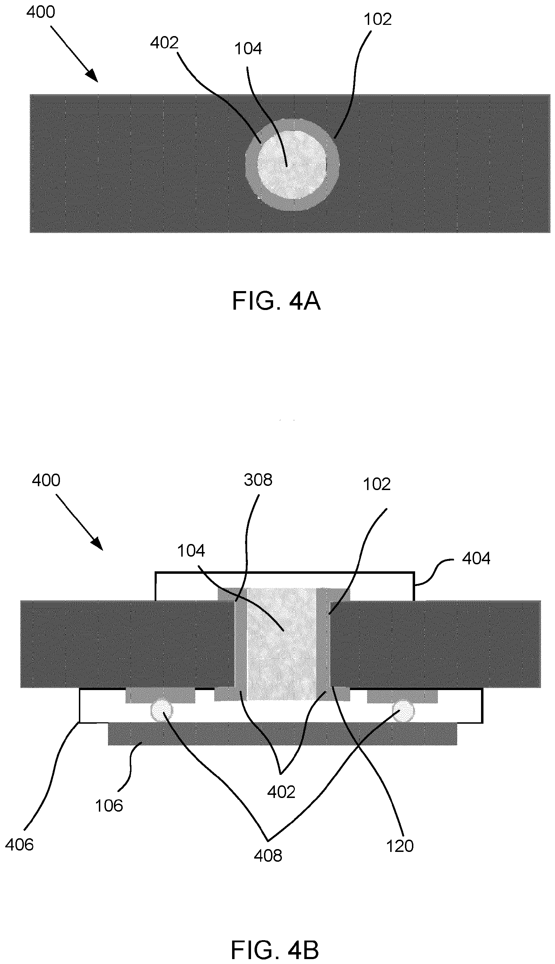

FIG. 4A illustrates a top-down view of an example PCB 400, wherein the hole 102 comprises a via in the PCB 400. The via may be of circular shape, as illustrated in FIG. 4A, or it may be any shape that can be generated as a via in a PCB manufacturing process. In the example of FIG. 4A, the hole 102 is a thru-plated via structure, wherein the scintillator material 104 is arranged to the via. A thru-plated via may refer to a PCB via, wherein the depth of the hole 102 extends over the total thickness of the PCB 400 (e.g., a thru-hole) and a metal plating 402 is arranged to the wall(s) of the via. Further, in FIG. 4B, which illustrates a side-view of the PCB 400, the metal plating 402 arranged to the walls of the hole 102 comprises the metallic material 302 of the previous example(s) illustrated in FIGs. 3A-C. However, portions of the metal reflector 402 outside the hole 102 (via) may extend slightly outwards along the axis perpendicular to the normal of the surface of the PCB 400, to increase the sturdiness of the metal plating 402.

Furthermore, in some embodiments, such as in the example embodiments of FIGs. 4A and 4B, a reflector tape 404 may be arranged to the second opening 308 of the hole 102, behaving similarly to the reflector 306 in the previous examples and the photodiode 106 may be arranged to the other side (the first opening 120) using studs 408 to attach the photodiode 106 to the PCB 400. The reflector tape may be an aluminum tape or a Teflon tape, for example. In addition, an optical epoxy 406 may be arranged in-between the photodiode 106 and the PCB 400, creating an epoxy filling. The optical epoxy 406 can be made from, for example, materials designed for optical clarity, high adhesive strength, and/or good environmental and chemical resistance. For example, the optical epoxy 406 may comprise epoxy resins that can provide the primary structure and mechanical properties of the optical epoxy 406. Alternatively or additionally, the optical epoxy 406 may comprise a hardener or a curing agent that reacts with the epoxy resin thus curing the epoxy resin.

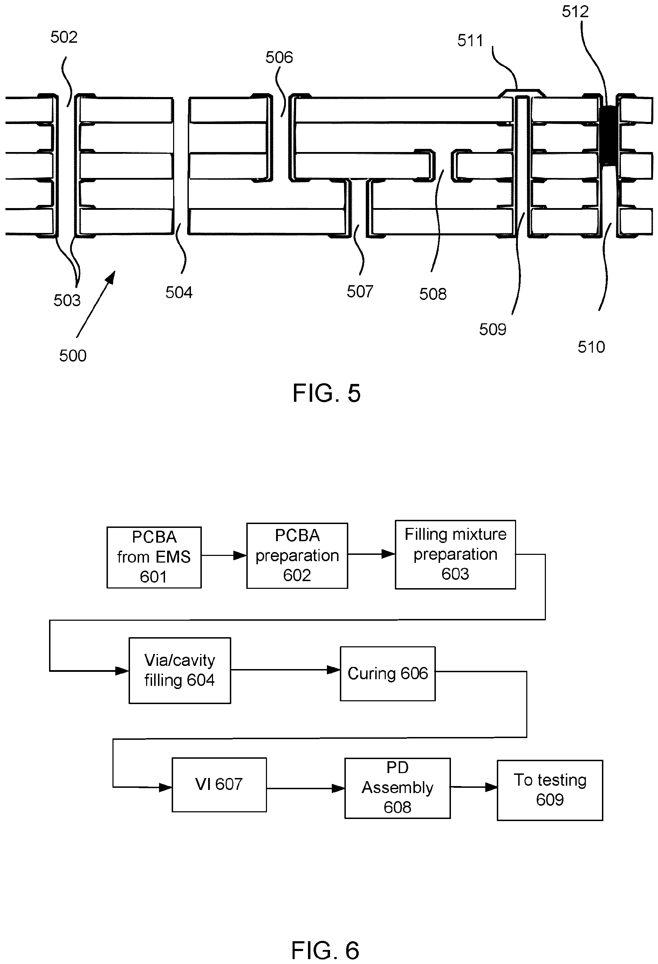

FIG. 5 illustrates different types of PCB via structures that the hole 102 may comprise as a side-view of a PCB 500.

At 502, the via is a plated-thru, PTH, via similar to the example illustrated in FIG. 4A and FIG. 4B, where the PTH via comprises a metal plating 503 arranged to the vertical faces of the via structure.

At 504, the via is a thru-via, without plating.

At 506, the via is a blind via, e.g., one of the openings of the hole 102 is not visible as it is arranged in-between the PCB 500 layers.

At 507, the via is a blind via, but arranged to the other side of the PCB 500.

At 508, the via is a buried via, which is not viable to function as the hole 102 of the disclosure, as any post-manufacturing processing techniques that may be performed on the scintillator material arranged to the hole may be impossible to execute.

At 509, the via is a tented or a 'capped' via, wherein a metal material 511 is arranged into one of openings of the via.

At 510, the via is a plugged via, wherein a material 512 may be used to "block" a portion of the via. This can be used to control the thickness of the scintillator material 104 and/or the depth of the hole 102, for example.

Although various types of vias are illustrated in one figure in the example embodiment of Fig. 5, the hole may be implemented using, for example, any of the via types illustrated. Thus, any of the vias illustrated in the example embodiment of Fig. 5 may be separated into a new embodiment.

In an embodiment, the hole 102 may comprise a PCB via, and the PCB via may comprise: a plated-thru hole via, a non-plated thru-via, a blind via, a capped (tented) via, or a plugged via.

In some embodiments, the photodiode 106 may be alternatively a BSI diode or an FSI diode, depending on the required application.

FIG. 6 illustrates example steps of how the example embodiments of the PCB may be implemented/manufactured. First, at 601, a PCB assembly, PCBA, is received from an electronic manufacturing service, EMS. The PCBA at this stage comprises the layout (e.g., the desired holes) wherein the rest of the steps may be implemented on. Secondly, at 602, the PCBA may be prepared for filling by, for example, assembling the photodiodes at their current location (bonding, flip-chip processing etc.). Thirdly, at 603, the filling mixture is prepared and at 604 the holes (via/cavity) are filled. At 606, a curing process may be executed, further increasing the properties of the scintillator material. At 607, the vias may be processed with a protection process (VI), for example, tenting, capping or plugging. At 608, the PCBA may be submitted to photodiode assembly (PD assembly) and finally, at 609, the PCBA may be submitted to testing. In some cases, the PD assembly may be performed before the filling preparation.

To properly implement a complete X-ray detection device, multiple holes may be needed to generate image information for further processing. An example embodiment of a PCB disclosed herein may comprise a plurality of holes 102. For example, some holes may be configured to detect radiation in 80-1000 keV range and some holes may be configured to detect radiation in 10-100 keV range.

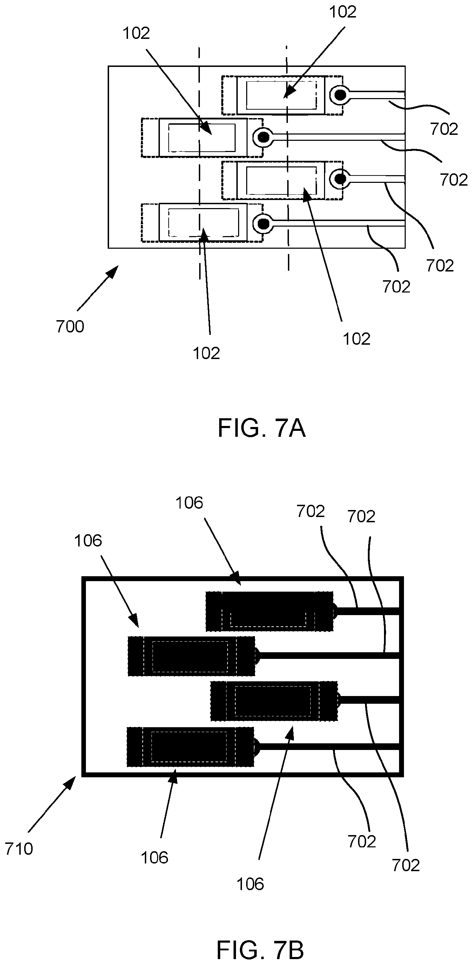

FIG. 7A illustrates a top-down view of an example embodiment of a PCB 700.

According to an embodiment, in the PCB 700, a plurality of holes 102 are configured as two physically separated sets along a direction across the PCB 700. The two sets can be along a single direction. For example, the two sets can be substantially parallel. For example, each set from the two sets can be arranged into a line and the lines can be substantially parallel.

In the example of FIG. 7A, each hole 102 in the plurality of holes may be a PCB via as illustrated in the example of FIG. 4A and FIG. 4B and wherein the photodiode 106 may be arranged on one side of the PCB 700. In the example of FIG. 7A, the photodiodes are arranged on a secondary side of the PCB (the side not visible from the top-down view). Furthermore, the reflector tape 404 may be arranged on the primary side (the side visible from the top-down view) of the PCB, depending on the required configuration of the holes (and the scintillator material 104 arranged to the holes 102) .

The two physically separated sets and the direction across the PCB 700 are illustrated with the dashed lines in FIG. 7A. The left set may be called an "even line" and the right set may be called an "odd line". The naming "even line" and "odd line" is used to notate that the even and odd line can be configured as one pixel row. Every other pixel of the pixel row can correspond to the even line and every other pixel can correspond to the odd line. Thus, even though the holes in the even and odd lines may be in a staggered formation, such as what is illustrated in the example embodiment of Fig. 7A, the holes from both lines can be used as one row of pixels.

In some embodiments, the even line may be configured for lower energies, such as 10-100 keV, and the odd line may be configured for higher energies, such as 80-1000 keV. Then one pixel may be formulated from the data obtained by each odd and even -pair of holes 102 by, for example, using dual-energy processing techniques.

Each hole 102 may have a respective data line 702, that may carry electrical signal information provided by the photodiode 106 to be further processed.

FIG. 7B illustrates an example PCB 710 according to an example embodiment, however the vertical axis of the holes 102 relative to the normal of the PCB 710 is reversed. E.g., the photodiodes 106 are now on the primary side of the PCB 710.

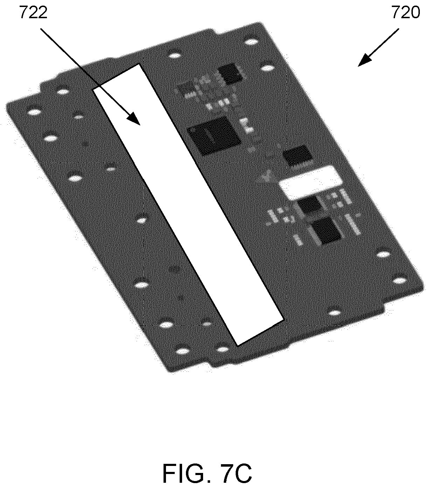

FIG. 7C illustrates an example PCB 720 with integrated electronics wherein a white rectangular area 722 notates an example area, wherein the two physically separated sets of FIGS. 7A and 7B may be placed on the PCB 720 - e.g., next to some processing chips like Analog-to-Digital converters, analogue filters and/or the like.

It is to be noted, that the examples set forth in FIGS. 7A-C are not limited only to "via-type" holes, but any hole and/or cavity -types that may be placed on a PCB as those two physically separated sets and wherein a scintillator material may be arranged in.

The disclosure does not limit the configuration of holes to the given examples - as the examples are only given as a guideline how pixel information may be formulated from the two physically separated sets. One such example is to use the LE/HE -detector configuration described above.

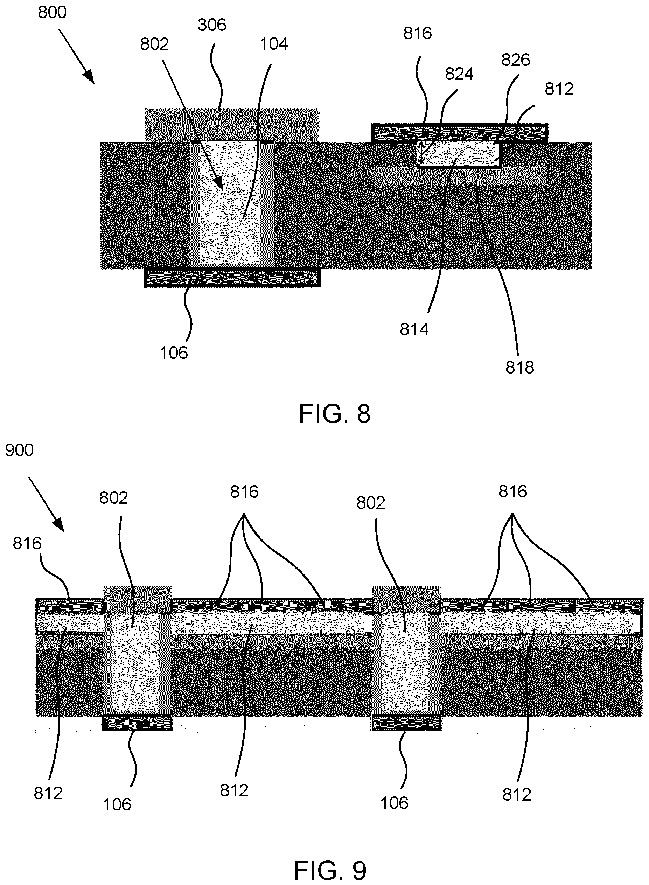

FIG. 8 illustrates an example embodiment of a PCB 800. In the example embodiment, there are two differently constructed holes: One for detecting higher energies than the other. The former may be referred to as HE-holes 802 and the latter may be referred to as LE-holes 814. These two holes may be arranged on different configurations. For example, the PCB 800 may comprise a plurality of HE-holes 802 and a plurality of LE-holes 812, where the HE-holes 802 may be configured to, for example, detect energies in 80-1000 keV range and the LE-holes may be configured to, for example, detect radiation in 10-100 keV range. They may be arranged in the PCB 800 in any way that is possible by different manufacturing techniques. For example, some HE-holes 802 may comprise a PTH via and some LE-holes may comprise a blind via etc.

According to an embodiment, the hole 102 of previous examples comprises a High-Energy, HE, -hole 802 and the PCB 800 further comprises: a Low-Energy, LE, - hole 812, wherein a scintillator material 814 is arranged to the LE-hole 812 along a depth direction of the LE-hole 812 and the scintillator material 814 arranged to the LE-hole 812 comprises a second thickness 824; and wherein the second thickness 824 of the scintillator material 814 arranged to the LE-hole 812 is configured to be such that the scintillator material 814 arranged to the LE-hole 812 converts radiation in a fourth energy range to radiation in a fifth energy range, the fourth energy range comprising lower energies than the first energy range of the HE-hole 802.

While the fourth energy range comprises lower energies than the first energy range, it is possible that their spectral range may overlap with each other in some embodiments.

The naming HE/LE-hole is used to notate that the HE-hole 802 is configured to detect energies higher than the LE-hole 812 and it does not limit the first energy range and the fourth energy range to certain predefined ranges. The first energy range may comprise higher energies than the fourth energy range. The fourth energy range may not comprise energies higher than the first energy range.

Furthermore, the LE-hole 812 may further comprise a third opening 826, wherein at least one photodiode 816 may be arranged to the third opening 826 and wherein the fifth energy range is detectable by the at least one photodiode 816 arranged to the third opening 826.

As the LE-hole 812 can be used to detect lower energies than the HE-hole 802, the physical construction of the LE-hole 812 can be simpler than of the HE-hole 802. For example, the use of metallic material in the walls may not be necessary, and/or the reflector may be a PCB copper layer as illustrated in FIG. 8 at 818, and the LE-hole 812 may not need to comprise a thru-via, thru-hole or a thru-cavity.

The HE-hole 802 may comprise any properties/elements of the hole 102 described earlier, such as the reflector 306 and the photodiode 106. E.g., the HE-hole 802 may comprise the embodiments illustrated in FIG. 4A, FIG. 4B, FIG. 7A, and/or FIG. 7B.

According to an embodiment, a plurality of HE-holes 802 and the plurality of LE-holes 812 may be arranged to alternate between sets of the plurality of HE-holes 802 and the plurality of LE-holes 812 along a direction across the PCB. For example, in some embodiments, there may be three photodiodes 816 for each LE-hole.

FIG. 9 illustrates an example embodiment of the PCB 900, wherein the PCB 900 comprises a plurality of HE-holes 802 and a plurality of LE-holes 812 described in FIG. 8. In the PCB 900, one photodiode 106 for each HE-hole 802 and three photodiodes for each LE-hole 812 are arranged to separate the dual-energy image information. Thus, there can be three LE-pixels for each HE-pixel. In other embodiments, the ratio between the number of photodiodes 816 for LE-holes 812 and the number of photodiodes 816 for HE-holes 802 can be some other value. For example, in some embodiments, there may be two photodiodes 816 for each LE-hole 812 and one photodiode 816 for each HE-hole 802.

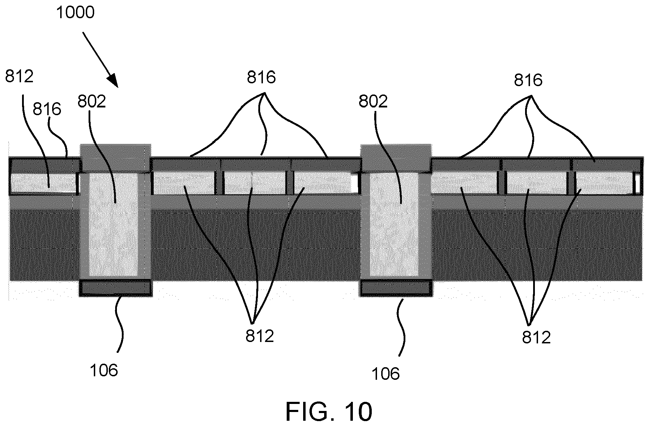

FIG. 10 illustrates a PCB 1000 with a ratio of 1/3 of HE-holes 802 to LE-holes 812, however any ratio is possible. For example, any embodiment that can be implemented using a plurality of photodiodes 816 for each LE-hole 816, such as what is illustrated in the example embodiment of Fig. 9, can alternatively be implemented by using one photodiode 816 for each LE-hole 812 and adjusting the ratio of HE-holes 802 to LE-holes 812.

According to an embodiment, the plurality of HE-holes 802 and the plurality of LE-holes 812 are arranged to alternate between single HE-holes 802 and sets of LE-holes 812 along the direction across the PCB. For example, in the embodiment of Fig. 10, the plurality of HE-holes 802 and the plurality of LE-holes 812 are arranged to alternate between single HE-holes 802 and sets of three LE-holes 812 along the direction across the PCB.

The examples set forth in FIG. 9 and FIG. 10 can enable a low-cost PCB for radiation detection - as less scintillator material may be required due to the varying depth of the HE-holes 802 and LE-holes 812.

While FIG. 8, FIG. 9 and FIG. 10 display the photodiode of the HE-hole 802 arranged to the underside of the PCB 820 and vice-versa for the LE-hole 812 photodiodes 816, any configuration of top-bottom, bottom-bottom, top-top etc., that is possible to manufacture, is enabled by the disclosure.

An example embodiment of the PCB may be for example, a ceramic PCB or an aluminum PCB. Different base materials for PCB manufacturing are available, and the disclosure does not exclude the use of different base materials.

An example embodiment of an X-ray detector comprises embodiments of the PCB disclosed herein.

It will be understood that the above description is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from scope of this specification.

Further examples of modification to embodiments may comprise, for example, arranging only a plurality of HE-holes 802 to form the detector. Alternatively, using a higher ratio of HE-holes 802 to LE-holes 812 is possible, for example, a ratio of 4/3 or the like.

It is to be noted for the person skilled in the art, that when the disclosure is configured to form an X-ray detector using a combination of HE-holes and LE-holes, dual-energy techniques for signal processing may be utilized. For example, spatial resolution may be mainly defined by the LE-detectors with thinner scintillator material configuration, and the dynamic range and steel penetration may be mainly defined by the HE-detectors with thicker scintillator material configuration.

## Claims

1. A printed circuit board, PCB (100, 300, 400, 700, 800), for radiation detection, comprising:
a hole (102), wherein a scintillator material (104) is arranged to the hole along a depth direction of the hole such that the scintillator material comprises a thickness (122); and
wherein the thickness of the scintillator material is configured to be such that the scintillator material converts radiation in a first energy range to radiation in a second energy range, the second energy range comprising lower energies than the first energy range.

2. The PCB (100, 300, 400, 700, 800) of claim 1, wherein the hole (102) further comprises:
a first opening, wherein a photodiode (106) is arranged to the first opening;
wherein the second energy range is detectable by the photodiode.

3. The PCB (100, 300, 400, 700, 800) of any of claims 1-2, wherein a metallic material (302) is arranged to at least a portion of at least one wall of the hole (102) and the metallic material is configured to at least partially reflect radiation in the first energy range.

4. The PCB (100, 300, 400, 700, 800) of claim 3, wherein at least a portion of the metallic material (302) arranged to at least a portion of the at least one wall of the hole (102) comprises gold, silver, and/or tin.

5. The PCB (100, 300, 400, 700, 800) of any preceding claim, wherein the hole further comprises a second opening and wherein a reflector (114) is arranged to the second opening; and the reflector is configured to at least partially reflect radiation at least in the first energy range.

6. The PCB (100, 300, 400, 700, 800) of claim 5, wherein the reflector comprises a PCB copper layer.

7. The PCB (100, 300, 400, 700, 800) of any preceding claim, wherein the hole is a PCB via.

8. The PCB (100, 300, 400, 700, 800) of claim 7, wherein the PCB via is: a plated thru hole, non-plated thru hole, a blind via, a capped via, or a plugged via.

9. The PCB (100, 300, 400, 700, 800) of any of claims 2-8, wherein the photodiode is a backside illuminated, BSI, photodiode or a frontside illuminated, FSI, photodiode.

10. The PCB (100, 300, 400, 700, 800) of any preceding claim, further comprising a plurality of the holes, and wherein the plurality of the holes is configured as two physically separated sets along a direction across the PCB.

11. The PCB (100, 300, 400, 700, 800) of claim 10, wherein the two physically separated sets of holes along the direction across the PCB are arranged on both sides of the PCB.

12. The PCB (100, 300, 400, 700, 800) of any preceding claim, wherein the hole (102) comprises a High-Energy, HE, -hole (802) and the PCB further comprises:
a Low-Energy, LE, -hole (812), wherein a scintillator material (814) is arranged to the LE-hole along a depth direction of the LE-hole and the scintillator material arranged to the LE-hole comprises a second thickness (824); and
wherein the second thickness of the scintillator material arranged to the LE-hole is configured to be such that the scintillator material arranged to the LE-hole converts radiation in a fourth energy range to radiation in a fifth energy range, the fourth energy range comprising lower energies than the first energy range of the HE-hole.

13. The PCB (100, 300, 400, 700, 800) of claim 12, wherein the LE-hole (812) further comprises:
a third opening (826), wherein at least one photodiode (816) is arranged to the third opening;
wherein the fifth energy range is detectable by the at least one photodiode.

14. The PCB (100, 300, 400, 700, 800) of claim 12 or claim 13, wherein the printed circuit board comprises:
a plurality of HE-holes (802) and a plurality of LE-holes (812); and
the plurality of HE-holes and the plurality of LE-holes are arranged to alternate between sets of the plurality of HE-holes and the plurality of LE-holes along a direction across the PCB.

15. The PCB of any preceding claim, wherein the PCB is a ceramic PCB or an aluminium PCB.

16. An X-Ray detector device comprising the PCB of any preceding claim.
